(19) **Europäisches Patentamt**
**European Patent Office**
**Office européen des brevets**

(11) **EP 4 678 269 A1**

(12) **EUROPÄISCHE PATENTANMELDUNG**

(43) Veröffentlichungstag:
**14.01.2026 Patentblatt 2026/03**

(21) Anmeldenummer: **24020233.3**

(22) Anmeldetag: **10.07.2024**

(51) Internationale Patentklassifikation (IPC):
**B01D 53/047** (2006.01)    **B01D 53/26** (2006.01)

(52) Gemeinsame Patentklassifikation (CPC):
**B01D 53/047; B01D 53/265;** B01D 2256/16;
B01D 2257/406; B01D 2257/80

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Linde GmbH**
**82049 Pullach (DE)**

(72) Erfinder:
• **Heinzel, Albrecht**
**82049 Pullach (DE)**
• **Reinke, Michael**
**82049 Pullach (DE)**

(74) Vertreter: **Fischer, Werner**
**Linde GmbH**
**Intellectual Property EMEA**
**Dr.-Carl-von-Linde-Straße 6-14**
**82049 Pullach (DE)**

(54) **VERFAHREN UND VORRICHTUNG ZUR TRENNUNG EINES AMMONIAKSPALTGASES**

(57) Die Erfindung betrifft ein Verfahren sowie eine Vorrichtung zur Erzeugung eines wasserstoffhaltigen Produktgases (6) aus einem Ammoniakeinsatz (1), der hierbei in einem Spaltreaktor (S) durch katalytisch unterstützte thermische Ammoniakspaltung umgesetzt wird, um ein Wasserstoff, Stickstoff, Ammoniak und Wasser enthaltendes Spaltgas (2) zu gewinnen, das den Spaltreaktor (S) mit einer Temperatur von mehr als 500°C verlässt und anschließend zu einem Wasserstoff, Stickstoff, Ammoniak und Wasser umfassenden Adsorbereinsatz (5) aufbereitet wird, der mit einer zwischen 10 und 80°C liegenden Temperatur in einen Druckwechseladsorber (DWA) eintritt, wo zumindest Ammoniak und Wasser durch Druckwechseladsorption abgetrennt werden und das wasserstoffhaltige Produktgas (6) oder ein gegenüber dem Adsorbereinsatz an Wasserstoff angereichertes Gasgemisch erhalten wird, aus dem in wenigstens einem weiteren Verfahrensschritt das wasserstoffhaltige Produktgas entsteht. Kennzeichnend hierbei ist, dass sämtliche Bestandteile des Spaltgases (2) bei seiner Aufbereitung in den Adsorbereinsatz (5) überführt und mit diesem der Druckwechseladsorption (DWA) zugeführt werden.

Fig. 1

EP 4 678 269 A1

**Beschreibung**

Die Erfindung betrifft ein Verfahren zur Erzeugung eines wasserstoffhaltigen Produktgases aus einem wasserhaltigen Ammoniakeinsatz, der hierbei in einem Spaltreaktor durch katalytisch unterstützte thermische Ammoniakspaltung umgesetzt wird, um ein Wasserstoff, Stickstoff, Ammoniak und Wasser enthaltendes Spaltgas zu gewinnen, das den Spaltreaktor mit einer Temperatur von mehr als 500°C verlässt und anschließend zu einem Wasserstoff, Stickstoff, Ammoniak und Wasser umfassenden Adsorbereinsatz aufbereitet wird, der mit einer zwischen 10 und 80°C liegenden Temperatur in einen Druckwechseladsorber (DWA) eintritt, wo zumindest Ammoniak und Wasser durch Druckwechseladsorption abgetrennt werden und das wasserstoffhaltige Produktgas oder ein gegenüber dem Adsorbereinsatz an Wasserstoff angereichertes Gasgemisch erhalten wird, aus dem in wenigstens einem weiteren Verfahrensschritt das wasserstoffhaltige Produktgas entsteht.

Weiterhin betrifft die Erfindung eine Vorrichtung zur Durchführung des erfindungsgemäßen Verfahrens.

Ammoniak ist ein vielversprechender Kandidat, um Wasserstoff als Energieträger für die gesamte Bandbreite stationärer und mobiler Anwendungen bereitzustellen. Der Vorteil von Ammoniak gegenüber molekularem Wasserstoff liegt darin, dass flüssiges Ammoniak einfacher zu transportieren und zu speichern ist. Da es seit vielen Jahren etwa in der Düngemittelproduktion eingesetzt wird, sind die Verfahren zu seiner Lagerung und Verteilung technologisch ausgereift, wobei allerdings nicht reines, sondern sog. technisches Ammoniak zum Einsatz kommt, dass zur Unterdrückung von Korrosionsproblemen zwischen 0,2 und 0,5Gew.-% Wasser enthält.

Die Erzeugung von wasserstoffhaltigen Gasen wie Reinwasserstoff oder Formiergas durch katalytisch unterstütze Spaltung von Ammoniak ist ebenfalls bekannt und seit vielen Jahren Stand der Technik. Die bei der Spaltung ablaufende Reaktion

$$2NH_3 \leftrightarrow N_2 + 3H_2$$

ist endotherm ($\Delta H=46,2kJ/mol$). Die Lage des Gleichgewichts und die Reaktionsgeschwindigkeit hängen stark von Druck und Temperatur sowie von der Art des eingesetzten Katalysators ab.

Insbesondere für industrielle Anwendungen mit einem vergleichsweise geringen Wasserstoffbedarf von weniger als $1000m_n^3/h$, wie beispielsweise für die Wärmebehandlung von Metallen, wird die Ammoniakspaltung in Spaltreaktoren durchgeführt, zu deren Beheizung an anderer Stelle erzeugter elektrischer Strom importiert wird. Prinzipiell kann der Wasserstoff hierbei ohne Freisetzung von Kohlendioxid zur Verfügung gestellt werden.

Um Wasserstoff bzw. Formiergas aus Ammoniak mit höheren Raten herzustellen, können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Spaltreaktor mit einem Feuerraum, in dem mit Katalysatormaterial gefüllte Spaltrohre angeordnet sind, sowie ein Abhitzesystem. Der Feuerraum wird durch einen oder mehrere mit importiertem Brennstoff befeuerte Brenner beheizt, die Energie für die endotherm ablaufende Spaltung des durch die Spaltrohre geführten Ammoniaks liefern.

Damit der erzeugte Wasserstoff ohne oder mit nur geringem Verdichtungsaufwand in einem Produktgas abgegeben werden kann, wird die Ammoniakspaltung zweckmäßigerweise bei Drücken zwischen 20 und 40 bar durchgeführt. Dies ist umso einfacher möglich, als das für die Spaltung bestimmte Ammoniak gewöhnlich flüssig zur Verfügung steht, weshalb sein Druck mit nur geringem Energieaufwand erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei hohen Temperaturen zwischen ca. 500 und 1000°C zu betreiben, so dass das Spaltgas mit einer entsprechend hohen Temperatur den Spaltreaktor verlässt.

Als Einsatz für die Ammoniakspaltung wird üblicherweise sog. technisches Ammoniak (anhydrous ammonia) verwendet, das zum Schutz der Speicherbehälter vor Korrosion einen Wasseranteil zwischen 0,2 und 0,5Gew.-% aufweist. Das Spaltgas, das zum größten Teil aus Wasserstoff, Stickstoff und nicht umgesetztem Ammoniak besteht, enthält daher auch Wasser aus dem Ammoniakeinsatz, das nicht an der Spaltreaktion teilnimmt.

Zur Gewinnung des wasserstoffhaltigen Produktgases kann das das Spaltgas ähnlich wie ein durch Dampfreformierung erhaltenes Syntheserohgas behandelt und bis unter den Wassertaupunkt abgekühlt werden, um Wasser zu kondensieren und in einem Abscheider von der Gasphase zu trennen. Mit einer geeigneten, gewöhnlich zwischen 10 und 80°C liegenden Eintrittstemperatur wird die Gasphase als Einsatz einem Druckwechseladsorber zugeführt, wo sie in das wasserstoffhaltige Produktgas bzw. ein gegenüber dem Adsorbereinsatz an Wasserstoff angereichertes Gasgemisch sowie ein ammoniakhaltiges Restgas (DWA-Restgas) getrennt wird, das beispielsweise als Brenngas zur Bereitstellung von Wärme für die Ammoniakspaltung verbrannt wird. Wegen seiner starken Hygroskopie wird auch ein nicht unerheblicher Teil des Ammoniaks gemeinsam mit dem Wasser aus dem Spaltgas abgetrennt und aus dem Abscheider in einer als Ammoniakwasser bezeichneten Flüssigphase abgezogen, die entweder unter hohen Kosten entsorgt oder einer aufwendigen Prozedur zur Rückgewinnung des Ammoniaks unterzogen werden muss.

Aufgabe der vorliegenden Erfindung ist es daher, ein Verfahren sowie eine Vorrichtung zu dessen Durchführung anzugeben, mit denen die beschriebenen Nachteile des Standes der Technik überwunden werden.

Verfahrensseitig wird die gestellte Aufgabe erfindungsgemäß dadurch gelöst, dass sämtliche Bestandteile des Spaltgases bei seiner Aufbereitung in den Adsorbereinsatz überführt und mit diesem der Druckwechseladsorption zugeführt werden.

Bei der Aufbereitung des Spaltgases zum Adsorbereinsatz wird insbesondere kein Wasser auskondensiert. Das gesamte im Spaltgas enthaltene Ammoniak gelangt daher in den Druckwechselabsorber, wo es zusammen mit dem enthaltenen Wasser in das DWA-Restgas überführt wird. Die Abkühlung des Spaltgases auf eine für den Druckwechseladsorber geeignete Eintrittstemperatur erfolgt dabei kontrolliert und so, dass eine Taupunktsunterschreitung sicher vermieden wird. Vorzugsweise wird dabei ein "Sicherheitsabstand" $\Delta T_S$ zum Taupunkt des Spaltgases $T_{Sp}$ von 10 bis 15°C nicht unterschritten.

Falls der Taupunkt des Spaltgases unterhalb der höchsten für den Druckwechseladsorber geeigneten Eintrittstemperatur $T_{Eo}$ liegt und zu dieser einen größeren als den Sicherheitsabstand aufweist, erfolgt die Aufbereitung des Spaltgases zum Adsorbereinsatz bevorzugt lediglich durch kontrollierte Abkühlung auf eine Temperatur $T_{AE}$, für die gilt:

$$T_{Sp} + \Delta T_S < T_{AE} \le T_{Eo}$$

Liegt der Taupunkt des Spaltgas jedoch um weniger als den Sicherheitsabstand unterhalb oder sogar über der höchsten für den Druckwechseladsorber geeigneten Eintrittstemperatur, so kann das Spaltgas nicht durch bloße Abkühlung zum Adsorbereinsatz aufbereitet werden. Eine zweckmäßige Variante des erfindungsgemäßen Verfahrens sieht dann vor, dem Spaltgas ein Gas (Zumischgas) zuzumischen, das einen Taupunkt

$$T_{Zu} < T_{Eo} - \Delta T_S$$

besitzt, um ein Gasgemisch mit einem ebenfalls in diesem Temperaturbereich liegenden Taupunkt $T_M$ zu erzeugen und dieses Gasgemisch zum Erhalt des

Adsorbereinsatzes kontrolliert auf eine Temperatur $T_{AE}$, abzukühlen für die gilt:

$$T_M + \Delta T_S < T_{AE} \le T_{Eo}$$

Vorzugsweise handelt es sich bei dem Zumischgas um einen Teil des gegenüber dem Adsorbereinsatz im Wasserstoffgehalt angereicherten, durch Druckwechseladsorption erhaltenen Gasgemisches oder um ein anderes stromabwärts des Druckwechseladsorbers anfallendes Gas. Insbesondere kann ein Teil des wasserstoffhaltigen Produktgases dem Spaltgas zugemischt werden. Sinnvollerweise wird das Zumischgas dem Spaltgas bei einer Temperatur oberhalb seines Taupunkts $T_{Sp}$ zugemischt.

Zur Abkühlung des Spaltgases und seiner Aufbereitung zum Adsorbereinsatz wird zweckmäßigerweise ein Spaltgaskühler mit einstellbarer Kühlleistung eingesetzt, der bevorzugt mit einem Stellantrieb ausgerüstet und als Stellglied in einen Regelkreis eingebunden ist, so dass die Temperatur des Spaltgases bei seiner Aufbereitung zum Adsorbereinsatz ohne menschlichen Eingriff automatisch oberhalb des Taupunkts gehalten wird. Als Kühlmedium dienen bevorzugt Luft und/oder Wasser.

Solange das erfindungsgemäße Verfahren im Normalbetrieb durchgeführt wird, ist sichergestellt, dass mit dem Adsorbereinsatz weder Wasser noch Ammoniak flüssig in den Druckwechseladsorber gelangt und das dort eingesetzte Adsorbermaterial beschädigt. Im Falle einer Störung, wenn beispielsweise die Kontrolle der Spaltgastemperatur nicht ordnungsgemäß funktioniert, kann es aber sein, dass im Spaltgas enthaltendes Wasser und/oder Ammoniak auskondensiert und ein zweiphasiges Stoffgemisch entsteht. Um zu verhindern, dass die Flüssigphase eines solchen Stoffgemisches den Druckwechseladsorber erreicht, wird vorgeschlagen, den bei der Abkühlung des Spaltgases erhaltenen Stoffstrom zumindest im Falle einer Betriebsstörung über einen Abscheider zu führen, der die Flüssigphase abtrennt und nur die trockene Gasphase als Adsorbereinsatz in den Druckwechseladsorber weiterleitet.

Weiterhin betrifft die Erfindung eine Vorrichtung zur Erzeugung eines wasserstoffhaltigen Produktgases, mit einem Spaltreaktor, in dem ein wasserhaltiger Ammoniakeinsatz durch katalytisch unterstützte thermische Ammoniakspaltung zu einem Wasserstoff, Stickstoff, Ammoniak und Wasser enthaltenden Spaltgas umgesetzt werden kann, einer Aufbereitungseinrichtung, mit der das Spaltgas zu einem Adsorbereinsatz aufbereitbar ist, sowie einem Druckwechseladsorber, dem der Adsorbereinsatz mit einer zwischen 10 und 80°C liegenden Eintrittstemperatur zugeführt werden kann, um zumindest Ammoniak und Wasser durch Druckwechseladsorption aus dem Adsorbereinsatz abzutrennen und das wasserstoffhaltige Produktgas oder ein gegenüber dem Adsorbereinsatz an Wasserstoff angereichertes Gasgemisch zu erhalten, aus dem in wenigstens einer weiteren Einrichtung das wasserstoffhaltige Produktgase erhältlich ist.

Vorrichtungsseitig wird die gestellte Aufgabe dadurch gelöst, dass die Aufbereitungseinrichtung dafür eingerichtet ist, sämtliche Bestandteile des Spaltgases in den Adsorbereinsatz zu überführen.

Vorzugsweise umfasst die Aufbereitungseinrichtung einen Spaltgaskühler mit einstellbarer Kühlleistung, mit dem das Spaltgas bzw. ein aus dem Spaltgas gebildeter Stoffstrom ohne Taupunktsunterschreitung bis auf eine für den Eintritt in den Druckwechseladsorber geeignete Temperatur zwischen 10 und 80°C abgekühlt werden kann. Sinnvollerweise ist der Spaltgaskühler mit einem Stellantrieb ausgerüstet und als Stellglied in einen Regelkreis eingebunden, so dass die Temperatur des Spaltgases bei seiner Aufbereitung zum Adsorbereinsatzes ohne menschlichen Eingriff automatisch oberhalb des Taupunkts gehalten werden kann.

Der Spaltgaskühler der Aufbereitungseinrichtung ist vorzugsweise als Luft- oder Wasserkühler oder als eine Kombination aus Luft- und Wasserkühler ausgeführt. Wenn am Standort der Vorrichtung Lufttemperaturen unterhalb des Taupunkts des Spaltgases zu erwarten sind, ist es sinnvoll, den Luftkühler mit einer internen Luftzirkulation auszuführen. Darüber hinaus können der Luftkühler sowie die Verbindungsleitungen zwischen der Aufbereitungseinrichtung und dem Druckwechseladsorber mit einer wärmisolierenden Einhausung umgeben und/oder mit einer Heizeinrichtung ausgeführt sein.

In einer Variante der erfindungsgemäßen Vorrichtung umfasst die Aufbereitungseinrichtung eine Zuführeinrichtung, über die ein Zumischgas dem Spaltgas zugemischt werden kann, um den Taupunkt abzusenken und ein Gasgemisch zu gewinnen, das zum Erhalt des Adsorbereinsatzes ohne Taupunktsunterschreitung abgekühlt werden kann. Bevorzugt ist die Zuführeinrichtung mit einer stromabwärts des Druckwechseladsorbers liegenden Entnahmestelle verbunden, über die ein Teil des gegenüber dem Adsorbereinsatz im Wasserstoffgehalt angereicherten, im Druckwechseladsorber erhaltenen Gasgemisches oder ein anderes stromabwärts des Druckwechseladsorbers anfallendes Gas als Zumischgas entnommen werden kann, um dem Spaltgas, nach der erforderlichen Druckerhöhung mittels eines Verdichters, zugemischt zu werden.

Eine weitere Variante der erfindungsgemäßen Vorrichtung sieht einen zweckmäßigerweise am austrittseitigen Ende der Aufbereitungseinrichtung angeordneten Abscheider vor, der dazu eingerichtet ist, bei der Spaltgaskühlung störungsbedingt auskondensiertes Wasser und/oder Ammoniak abzutrennen und einen von flüssigem Wasser und Ammoniak freien Adsorbereinsatz in den Druckwechseladsorber weiterzuleiten. Die Aufbereitungseinrichtung kann mit einem Bypass ausgeführt sein, über den der Adsorbereinsatz an dem während des Normalbetriebs der Vorrichtung funktionslosen Abscheider vorbeiführbar ist. Möglich ist es aber auch, auf einen Bypass zu verzichten, so dass der bei der Abkühlung des Spaltgases erhaltene Stoffstrom nicht nur im Falle einer Störung, sondern auch während des Normalbetriebs über den Abscheider geführt wird.

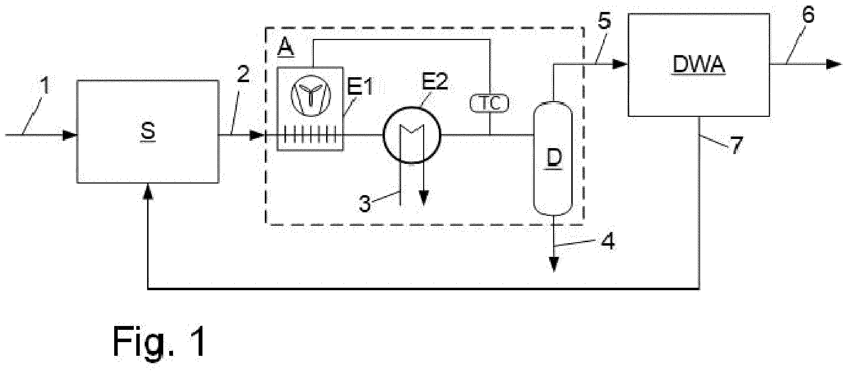

Im Folgenden soll die Erfindung anhand eines in der Figur 1 schematisch dargestellten Ausführungsbeispiels näher erläutert werden.

Die Figur 1 zeigt die Erzeugung eines wasserstoffhaltigen Produktgases durch Ammoniakspaltung gemäß einer bevorzugten Variante des erfindungsgemäßen Verfahrens.

Über Leitung 1 wird ein wasserhaltiger Ammoniakeinsatz, bei dem es sich um technisches Ammoniak handeln kann, dem über einen Brenner beheizten Spaltreaktor S zugeführt, um Ammoniak bei Drücken zwischen 20 und 40bar sowie Temperaturen bis zu 1000°C mit katalytischer Unterstützung zu spalten. Das dabei mit einer Temperatur von mehr als 500°C entstehende, Wasserstoff, Stickstoff, Ammoniak und Wasser enthaltende Spaltgas wird auf ein sicher oberhalb des Taupunkts liegende Temperatur von ca. ...°C vorgekühlt (nicht dargestellt) und über Leitung 2 der Aufbereitungseinrichtung A zugeführt, wo seine Temperatur über den in einen Regelkreis eingebundenen Luftkühler E1 sowie den mit Kühlwasser 3 betriebenen Wärmetauscher E2 weiter reduziert wird. Die Abkühlung wird kontrolliert bis auf eine für den Druckwechseladsorber DWA geeignete Eintrittstemperatur zwischen 10 und 80°C, ohne dabei den Taupunkt des Spaltgases 2 zu unterschreiten. Der auf diese Weise erhaltene Adsorbereinsatz 5, der sämtliche Bestandteile des Spaltgases 2 umfasst, wird in den Druckwechseladsorber DWA weitergeleitet, wo zumindest Wasser und Ammoniak in einem Restgas 7 abgetrennt werden und ein wasserstoffhaltiges Produktgas (6) entsteht. Das Restgas 7 wird zum Spaltreaktor S zurückgeführt und zur Erzeugung von Wärme für die Ammoniakspaltung verbrannt.

Wenn beispielsweise die Kontrolle der Spaltgastemperatur nicht ordnungsgemäß funktioniert, kann es sein, dass im Spaltgas enthaltendes Wasser und/oder Ammoniak auskondensiert und ein zweiphasiges Stoffgemisch entsteht. Um zu verhindern, dass die Flüssigphase eines solchen Stoffgemisches den Druckwechseladsorber DWA erreicht und das dort eingesetzte Adsorbermaterial beschädigt, umfasst die Aufbereitungseinrichtung A einen Flüssigkeitsabscheider D, der die Flüssigphase abtrennt und nur die trockene Gasphase als Adsorbereinsatz 5 in den Druckwechseladsorber DWA weiterleitet.

## Patentansprüche

1. Verfahren zur Erzeugung eines wasserstoffhaltigen Produktgases (6) aus einem wasserhaltigen Ammoniakeinsatz (1), der hierbei in einem Spaltreaktor (S) durch katalytisch unterstützte thermische Ammoniakspaltung umgesetzt wird, um ein Wasserstoff, Stickstoff, Ammoniak und Wasser enthaltendes Spaltgas (2) zu gewinnen, das den Spaltreaktor (S) mit einer Temperatur von mehr als 500°C verlässt und anschließend zu einem Wasserstoff, Stickstoff, Ammoniak und Wasser umfassenden Adsorbereinsatz (5) aufbereitet wird, der mit einer zwischen 10 und 80°C liegenden Temperatur in einen Druckwechseladsorber (DWA) eintritt, wo zumindest Ammoniak und Wasser durch Druckwechseladsorption abgetrennt werden und das wasserstoffhaltige Produktgas (6) oder ein gegenüber dem Adsorbereinsatz an Wasserstoff angereichertes Gasgemisch erhalten wird, aus dem in wenigstens einem weiteren Verfahrensschritt das wasserstoffhaltige Produktgas entsteht, **dadurch gekennzeichnet, dass** sämtliche Bestandteile des Spaltgases (2) bei seiner Aufbereitung in den Adsorbereinsatz (5) überführt und mit diesem der Druckwechseladsorption (DWA) zugeführt werden.

2. Verfahren nach Anspruch 1, **dadurch gekennzeichnet, dass** das Spaltgas (2) ohne Taupunktsunterschreitung zum Adsorbereinsatz (5) aufbereitet wird.

3. Verfahren nach einem der Ansprüche 1 oder 2, **dadurch gekennzeichnet, dass** dem Spaltgas (2) bei der Aufbereitung zum Adsorbereinsatz (5) ein Gas (Zumischgas) zugemischt wird, dessen Taupunkt niedriger als der Taupunkt des Spaltgases (2) ist.

4. Verfahren nach Anspruch 3, **dadurch gekennzeichnet, dass** es sich bei dem Zumischgas um ein stromabwärts der Druckwechseladsorption (DWA) anfallendes Gas handelt.

5. Verfahren nach einem der Ansprüche 1 bis 3, **dadurch gekennzeichnet, dass** aus dem Adsorbereinsatz (5) abgetrenntes Ammoniak (7) verbrannt wird, um Wärme für die Ammoniakspaltung zu erzeugen.

6. Verfahren nach einem der Ansprüche 1 bis 3, **dadurch gekennzeichnet, dass** der Adsorbereinsatz (5) der Druckwechseladsorption (DWA) über einen Flüssigkeitsabscheider (D) zugeführt wird.

7. Verfahren nach einem der Ansprüche 1 bis 4, **dadurch gekennzeichnet, dass** das Spaltgas (2) bei seiner Aufbereitung zum Adsorbereinsatz (5) in einem Spaltgaskühler (E1) mit einstellbarer Kühlleistung kontrolliert abgekühlt wird.

8. Vorrichtung zur Erzeugung eines wasserstoffhaltigen Produktgases (6), mit einem Spaltreaktor (S), in dem ein wasserhaltiger Ammoniakeinsatz (1) durch katalytisch unterstützte thermische Ammoniakspaltung zu einem Wasserstoff, Stickstoff, Ammoniak und Wasser enthaltenden Spaltgas (2) umgesetzt werden kann, einer Aufbereitungseinrichtung (A), mit der das Spaltgas (2) zu einem Adsorbereinsatz (5) aufbereitbar ist, sowie einem Druckwechseladsorber (DWA), dem der Adsorbereinsatz (5) mit einer zwischen 10 und 80°C liegenden Eintrittstemperatur zugeführt werden kann, um zumindest Ammoniak und Wasser durch Druckwechseladsorption aus dem Adsorbereinsatz (5) abzutrennen und das wasserstoffhaltige Produktgas (6) oder ein gegenüber dem Adsorbereinsatz (5) an Wasserstoff angereichertes Gasgemisch zu erhalten, aus dem in wenigstens einer weiteren Einrichtung das wasserstoffhaltige Produktgase erhältlich ist, **dadurch gekennzeichnet, dass** die Aufbereitungseinrichtung (A) dafür eingerichtet ist, sämtliche Bestandteile des Spaltgases (2) in den Adsorbereinsatz (5) zu überführen.

9. Vorrichtung nach Anspruch 8, **dadurch gekennzeichnet, dass** die Aufbereitungseinrichtung (A) einen Spaltgaskühler (E1) mit einstellbarer Kühlleistung umfasst.

10. Vorrichtung nach Anspruch 9, **dadurch gekennzeichnet, dass** der Spaltgaskühler (E1) in einen Regelkreis eingebunden ist.

11. Vorrichtung nach einem der Ansprüche 8 bis 10, **dadurch gekennzeichnet, dass** die Aufbereitungseinrichtung (A) eine Zuführeinrichtung umfasst, über die dem Spaltgas (2) ein Gas zugemischt werden kann, um den Taupunkt des Adsorbereinsatz (5) abzusenken.

12. Vorrichtung nach einem der Ansprüche 8 bis 11, **dadurch gekennzeichnet, dass** die Aufbereitungseinrichtung (A) mit einem Abscheider (D) ausgeführt ist, der dazu eingerichtet ist, eine bei der Spaltgaskühlung störungsbedingt erhaltene Flüssigphase abzutrennen und einen von Flüssigphasen freien Adsorbereinsatz (5) in den Druckwechseladsorber (DWA) weiterzuleiten.

Fig. 1

EUROPÄISCHER RECHERCHENBERICHT

Nummer der Anmeldung

EP 24 02 0233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2022/265651 A1 (AIR PROD & CHEM [US]) 22. Dezember 2022 (2022-12-22) | 1,2, 5-10,12 | INV. B01D53/047 |
| Y | * Abbildung 1 * <br> * Seite 3, Zeile 28 - Seite 4, Zeile 4 * <br> * Seite 12, Zeile 12 - Seite 13, Zeile 14 * | 3,4,11 | B01D53/26 |
| | ----- | | |
| X | EP 4 112 540 A1 (LINDE GMBH [DE]) 4. Januar 2023 (2023-01-04) | 1,2, 5-10,12 | |
| Y | * Abbildung 1 * <br> * Absätze [0001], [0007], [0018], [0037], [0038] * | 3,4,11 | |
| | ----- | | |
| Y | EP 0 703 814 B1 (HENKEL KGAA [DE]) 13. August 1997 (1997-08-13) <br> * Spalte 8, Zeile 22 - Spalte 9, Zeile 17 * | 3,4,11 | |
| | ----- | | |

**RECHERCHIERTE SACHGEBIETE (IPC)**

B01D

Der vorliegende Recherchenbericht wurde für alle Patentansprüche erstellt

| Recherchenort | Abschlußdatum der Recherche | Prüfer |
|---|---|---|
| München | 16. Januar 2025 | Pöhlmann, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 4 678 269 A1**

## ANHANG ZUM EUROPÄISCHEN RECHERCHENBERICHT
## ÜBER DIE EUROPÄISCHE PATENTANMELDUNG NR.

EP 24 02 0233

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2025

| Im Recherchenbericht angeführtes Patentdokument | Datum der Veröffentlichung | Mitglied(er) der Patentfamilie | Datum der Veröffentlichung |
|---|---|---|---|
| WO 2022265651 A1 | 22-12-2022 | AU 2021451048 A1 | 01-02-2024 |
| | | CA 3223295 A1 | 22-12-2022 |
| | | CN 117529359 A | 06-02-2024 |
| | | EP 4337363 A1 | 20-03-2024 |
| | | JP 2024524092 A | 05-07-2024 |
| | | KR 20240023427 A | 21-02-2024 |
| | | US 2024382896 A1 | 21-11-2024 |
| | | WO 2022265651 A1 | 22-12-2022 |
| EP 4112540 A1 | 04-01-2023 | EP 4112540 A1 | 04-01-2023 |
| | | EP 4363372 A1 | 08-05-2024 |
| | | JP 2024524083 A | 05-07-2024 |
| | | KR 20240028346 A | 05-03-2024 |
| | | WO 2023274573 A1 | 05-01-2023 |
| EP 0703814 B1 | 13-08-1997 | AT E156720 T1 | 15-08-1997 |
| | | AU 6999694 A | 03-01-1995 |
| | | CN 1125407 A | 26-06-1996 |
| | | DE 4319828 A1 | 22-12-1994 |
| | | EP 0703814 A1 | 03-04-1996 |
| | | JP H08511335 A | 26-11-1996 |
| | | KR 960702338 A | 27-04-1996 |
| | | WO 9428993 A1 | 22-12-1994 |

EPO FORM P0461

Für nähere Einzelheiten zu diesem Anhang : siehe Amtsblatt des Europäischen Patentamts, Nr.12/82

8